# EUROPÄISCHE PATENTSCHRIFT

(11) **EP 3 169 472 B1**
(45) Veröffentlichungstag und Bekanntmachung des Hinweises auf die Patenterteilung: **28.08.2019**
(21) Anmeldenummer: 15735630.4
(22) Anmeldetag: 07.07.2015
(51) Int. Cl.: B23K 9/167, B23K 9/16, B23K 9/24, B23K 35/02, H05H 1/28, H05H 1/34

(54) **ELEKTRODE FÜR EINEN SCHWEISSBRENNER ZUM WOLFRAM-SCHUTZGASSCHWEISSEN UND SCHWEISSBRENNER MIT SOLCHER ELEKTRODE**
ELECTRODE FOR A WELDING TORCH FOR TUNGSTEN GAS-SHIELDED WELDING AND WELDING TORCH HAVING SUCH AN ELECTRODE
ÉLECTRODE POUR TORCHE DE SOUDAGE POUR LE SOUDAGE AU TUNGSTÈNE SOUS PROTECTION GAZEUSE ET TORCHE DE SOUDAGE POURVUE D'UNE TELLE ÉLECTRODE

(30) Priorität: 15.07.2014 DE 102014010489; 05.02.2015 DE 102015001455
(43) Veröffentlichungstag der Anmeldung: 24.05.2017
(73) Patentinhaber: Linde Aktiengesellschaft, 80331 München (DE)
(72) Erfinder: SIEWERT, Erwan, 85283 Niederlauterbach (DE)
(86) Internationale Anmeldenummer: PCT/EP2015/001382
(87) Internationale Veröffentlichungsnummer: WO 2016/008572

(56) Entgegenhaltungen:
- EP-A1- 0 025 990
- EP-A1- 1 862 248
- DE-T2- 60 125 140
- JP-A- 2003 154 461
- JP-A- 2008 200 750
- RU-C2- 2 182 061
- US-A- 2 794 898
- US-A- 3 231 332
- US-A- 3 471 675
- US-A- 3 729 611

## Beschreibung

Die Erfindung betrifft eine Elektrode für einen Schweißbrenner zum Wolfram-Schutzgasschweißen, insbesondere zum Wolfram-Inertgasschweißen oder zum Plasmaschweißen, sowie einen entsprechenden Schweißbrenner.

### Stand der Technik

Beim Wolfram-Schutzgasschweißen, insbesondere beim Wolfram-Inertgasschweißen (WIG-Schweißen) und beim Plasmaschweißen handelt es sich um Verfahren zum Lichtbogenschweißen, die beispielsweise zum Auftragsschweißen, Verschweißen oder Verlöten von ein, zwei oder mehreren Werktücken aus metallischen Werkstoffen verwendet werden können. Das Werkstück und eine Wolframelektrode eines entsprechenden Schweißbrenners zum Wolfram-Schutzgasschweißen werden dabei elektrisch mit einer Schweißstromquelle verbunden. Ein Lichtbogen brennt zwischen der Wolframelektrode und dem Werkstück. Das Werkstück wird dabei zumindest teilweise aufgeschmolzen und bildet dort das Schmelzbad. Bei den meisten Werkstoffen wird die Wolframelektrode als Kathode verwendet und das Werkstück als Anode, wobei auf der Basis der physikalischen Stromrichtung Elektronen von der Wolframelektrode in das Werkstück übergehen.

Das Plasmaschweißen ist eine spezielle Ausführung des Wolfram-Inertgasschweißens. Beim Plasmaschweißen werden wenigstes zwei unabhängige Gase bzw. Gasgemische zugeführt. Zum einen wird ein Plasmagas (auch Zentrumsgas genannt) eingesetzt, welches durch die hohe Temperatur und die hohe Energie des Lichtbogens (zumindest teilweise) ionisiert wird. Durch den Lichtbogen wird somit ein Plasma erzeugt. Als Plasmagas wird insbesondere Argon oder ein Gasgemisch aus Argon mit Anteilen an Wasserstoff oder Helium verwendet. Das Außengas fungiert dabei als ein Schutzgas. Durch Helium oder ein heliumhaltiges Gasgemisch als Schutzgas kann die Wärmeleitfähigkeit verbessert und der Energieeintrag in das Werkstück gesteigert werden. Jedoch ist Helium im Vergleich zu anderen Schutzgasen wie Argon erheblich teurer und nicht überall verfügbar. Das Plasmaschweißen hat im Vergleich zum Wolfram-Inertgasschweißen den Nachteil, dass ein entsprechender Brenner zum Plasmaschweißen aufwendiger und teurer ist und durch den größeren Brenner die Zugänglichkeit und das Handling verschlechtert werden. Plasmaschweißen kann daher zumeist nur automatisiert durchgeführt werden.

Für das Wolfram-Schutzgasschweißen werden zumeist stangenförmige Elektroden aus reinem Wolfram oder aus Wolfram mit Zusätzen aus Metallen der Seltenen Erden (beispielsweise Lanthan, Cer, Yttrium, Zirconium und Thorium) eingesetzt. Diese Zusätze liegen zumeist als Oxide vor. Für die kathodische Polung werden die Elektroden werkstückseitig spitz angeschliffen. Die genannten Zusätze im Wolfram reduzieren die Austrittsarbeit der Elektronen, so dass die als Kathoden bestromte Elektroden bei sehr hohen Strömen betrieben werden können.

Das Wolfram-Inertgasschweißen bzw. Plasmaschweißen mit negativ gepolter Wolframelektrode kann beispielsweise für Aluminium, Aluminiumlegierungen, Bronze, Magnesium, Magnesiumlegierungen, Titan oder für weitere Werkstoffe, die hochschmelzende Oxide bilden, nicht oder nur bedingt eingesetzt werden. Problematisch ist, dass diese hochschmelzenden Oxide nicht aufgelöst werden. Daher können das Schmelzbad schwer beherrscht und die Schmelzbadausbildung unter der Oxidschicht schwer beobachtet werden. Es besteht die Gefahr von Oxideinschlüssen. Zudem ist der Energieeintrag in das Bauteil gering.

Die Polarität der Wolframelektrode und des Werkstücks können umgekehrt werden. (Die Wolframelektrode ist dann die Anode und das Werkstück die Kathode). Elektronen gehen in diesem Fall vom Werkstück in die Wolframelektrode über (physikalische Stromrichtung). Durch diese aus dem Werkstück austretenden Elektronen bzw. durch ein entsprechendes Ionenbombardement kann eine Oxidschicht, welche sich auf dem Werkstück bildet bzw. auf diesem vorhanden ist, aufgelöst werden, wodurch eine Reinigungswirkung erzielt wird. Durch diese Reinigungswirkung können Einschlüsse von Oxiden in der Schweißnaht vermieden werden. Beim Plasmaschweißen mit Stichloch wird dieser Effekt beispielsweise im Vergleich zum Wolfram-Inertgasschweißen verstärkt, da die gesamten Flanken der Fügepartner mit dem Plasma in Kontakt kommen und effektiv gereinigt werden.

Jedoch kann eine derartige Polung der Wolframelektrode als Anode nicht oder zumindest kaum effektiv und wirtschaftlich eingesetzt werden, da die Belastbarkeit der als Anode bestromten Wolframelektrode, insbesondere die thermische Belastbarkeit und die Strombelastbarkeit stark begrenzt sind. Beispielsweise beträgt die Strombelastbarkeit einer Wolframelektrode mit einem Durchmesser von 3,2 mm typischerweise zwischen 20 A und 35 A.

Trotz dieser geringen Stromstärken besteht dennoch die Gefahr, dass die Wolframelektrode aufgeschmolzen und aufgeschmolzenes Material von der Wolframelektrode abgelöst wird. Dies kann einerseits zu einer Zerstörung der Wolframelektrode und zu Prozessschwankungen führen sowie andererseits zu einer Verunreinigungen der Schweißnaht, wenn aufgeschmolzenes Material von der Wolframelektrode in das Schmelzbad des Werkstücks gelangt.

Durch derartige Verunreinigungen entstehen Fehler in der Schweißnaht, welche nur durch aufwendige Nacharbeit behoben werden können. Durch die geringe Strombelastbarkeit und somit durch die geringen Schweißströme, mit welchen die Wolframelektrode bestromt werden kann, kann zumeist nur ein geringer Energieeintrag in das Werkstück erzielt werden. Eine derartige Polung der Wolframelektrode als Anode kann daher zumeist nur für sehr dünne Werkstücke eingesetzt werden oder kann aufgrund der potentiellen Gefahr von Wolframeinschlüssen überhaupt nicht verwendet werden. Zudem ist die Schweißgeschwindigkeit gering.

Elektroden werden zumeist als Stab im Brenner anhand einer Spannzange fixiert, welche wiederum inirekt über die Brennerwandung gekühlt wird. Das Fixierung der Elektrode erfolgt demenstprechend über eine Klemmung. Die Spannzange wird zumeist von der werkstückabgewandten Seite des Schweißbrenners eingebracht.

Um die Belastbarkeit der Elektrode zu erhöhen und gleichzeitig eine gute Reinigungswirkung zu erzielen, können Wolframelektroden mit Wechselstrom bestromt werden. Beispielsweise kann die Strombelastbarkeit einer Wolframelektrode mit einem Durchmesser von 3,2 mm auf ca. 200 A erhöht werden. Allerdings sind Stromquellen, die einen derartigen Wechselstrom bereitstellen, komplexer und deutlich teurer als entsprechende Gleichstromquellen. Zudem entsteht beim Betrieb der Wolframelektrode mit Wechselstrom eine starke akustische Belastung für den Bediener. Ferner werden die Augen des Schweißers stärker beansprucht, da sich die Intensität der Lichtbogenstrahlung ständig durch den sich ändernden Schweißstrom verändert. Darüber hinaus besteht auch bei einem Wechselstrombetrieb die Gefahr, dass es zu einer Verunreinigung der Schweißnaht kommt. Zudem reduziert sich die in das Werkstück eingebrachte Energie im Vergleich zu einer Pluspolung der Wolframelektrode.

Aus dem Stand der Technik sind zwar Möglichkeiten bekannt, um die thermische Belastbarkeit von Elektroden beim Wolfram-Schutzgasschweißen zu verbessern. Jedoch sind diese Möglichkeiten nicht dazu geeignet, die Strombelastbarkeit einer als Anode bestromten Elektrode beim Wolfram-Schutzgasschweißen zu verbessern. Der Grundgedanke dieser Konzepte besteht dabei zumeist darin, die große Wärmemenge, welche auf die Elektrode trifft, effizient abzuführen. Zum einen wurde versucht die Kühlung der Elektrode zu verbessern, wie es beispielsweise in der DE 42 34 267 A1, der DE 42 05 420 A1, der DE 29 27 996A1 oder der US 3 569 661 A beschrieben wird.

Zum anderen kann ein hochschmelzender Einsatz in einen Körper aus Kupfer eingebracht werden und dieser Einsatz kann wassergekühlt werden, wie es beispielsweise in der US 4 590 354 oder der DE 10 2009 059 108 A1 oder DE 29 19 084 C2 beschrieben wird. Jedoch wird ein entsprechender Einsatz dabei als Kathode eingesetzt. Dabei spielen sich komplett andere physikalische Mechanismen ab, als es bei einer Verwendung als Anode der Fall ist. Derartige Einsätze sind also ungeeignet für das Wolfram-Schutzgasschweißen, bei welchem die Wolframelektrode als Anode bestromt wird.

Eine entsprechende Konstruktion, die als Anode verwendet wird, wird zwar beispielsweise in der EP 0 794 696 B1 oder der US 3 242 305 offenbart. Allerdings weisen auch derartige Elektroden nur eine geringe Strombelastbarkeit auf und eine Verwendung derartiger Elektroden bei Schweißstromstärken jenseits des Bereichs zwischen 20 A und 35 A ("Hochstrom-Schweißen") ist nicht oder kaum möglich.

Der Grund hierfür ist, dass eine gute Kühlung der als Anode bestromten Elektrode zu einem punktuellen Ansatz des Lichtbogens an der Anode führen kann, welcher zu sehr hohen Stromdichten und somit zu einer Zerstörung der Anode führen kann. Ist ein derartiger punktueller Lichtbogenansatz erreicht, wird Anodenmaterial verdampft, wodurch es zu einem selbstverstärkenden Effekt kommt. Der Lichtbogen findet am Ort der Verdampfung besonders günstige Ansatzbedingungen vor und fokussiert die Energieeinbringung an dieser Stelle. Da die Abläufe im Plasma um Größenordnungen schneller ablaufen als im Festkörper, kann eine Zerstörung der Anode auch durch eine gute Wärmeleitung (welche im Vergleich sehr viel langsamer abläuft) und eine effektive Kühlung nicht verhindert werden.

Es ist daher wünschenswert, das Wolfram-Schutzgasschweißen, insbesondere Wolfram-Inertgasschweißen bzw. Plasmaschweißen, mit einer als Anode bestromten Elektrode zu verbessern, insbesondere dahingehend, dass eine Strombelastbarkeit der Elektrode insbesondere für das Hochstrom-Schweißen erhöht werden kann.

Aus der US 2 794 898 A ist eine Elektrode mit einer Schutzgasdüse für einen Schweißbrenner zum Wolfram-Inertgasschweißen bekannt, wobei die Elektrode wenigstens einen Einsatz aus einem von dem Elektrodenmaterial verschiedenen Material aufweist, wobei der Einsatz zumindest zum Teil eine lichtbogenseitige Fläche der Elektrode bildet, wobei eine Schutzgasdüse vorgesehen ist, wodurch Schutzgas beim Schweißen zugeführt wird und wobei die Elektrode aus der Schutzgasdüse hervorsteht.

### Offenbarung der Erfindung

Diese Aufgabe wird durch eine Elektrode für einen Schweißbrenner zum Wolfram-Schutzgasschweißen, insbesondere zum Wolfram-Inertgasschweißen oder zum Plasmaschweißen, sowie einen entsprechenden Schweißbrenner mit den Merkmalen der unabhängigen Patentansprüche gelöst. Vorteilhafte Ausgestaltungen sind Gegenstand der jeweiligen Unteransprüche sowie der nachfolgenden Beschreibung.

Ein erfindungsgemäßer Schweißbrenner zum Wolfram-Schutzgasschweißen, insbesondere zum Wolfram-Inertgasschweißen oder zum Plasmaschweißen, weist eine erfindungsgemäße Elektrode auf. Die erfindungsgemäße Elektrode ist insbesondere dazu eingerichtet, als Anode bestromt zu werden, und ist insbesondere als eine Hochstrom-Anode ausgebildet. Die Elektrode wird insbesondere mit Strömen zwischen 80 A und 500 A bestromt. Der Schweißbrenner wird insbesondere zum Hochstrom-Schweißen verwendet.

Mittels des erfindungsgemäßen Schweißbrenners kann eine Auftragsschweißung, eine Schweißung oder eine Lötung von ein, zwei oder mehreren Werktücken aus metallischen Werkstoffen durchgeführt werden. Werden die Elektrode und ein zu schweißendes Werkstück mit einer Schweißstromquelle verbunden, wird ein Lichtbogen zwischen der Elektrode und dem Werkstück initiiert. Dieser Lichtbogen setzt an einer lichtbogenseitigen Fläche an der Elektrode an. Bevorzugt wird die Elektrode als Anode bestromt.

Der Schweißbrenner umfasst insbesondere eine Schutzgasdüse zur Zufuhr eines Schutzgases. Durch das Schutzgas wird der Lichtbogen direkt beeinflusst. Durch eine Zusammensetzung des Schutzgases wird die Effizienz des Schweißens direkt beeinflusst. Im Falle eines Schweißbrenners zum Plasmaschweißen umfasst dieser Plasmaschweißbrenner alternativ oder zusätzlich insbesondere eine Plasmagasdüse zum Zuführen eines Plasmagases, welches zumindest teilweise ionisiert wird.

Gemäß einem ersten erfindungsgemäßen Aspekt weist die Elektrode wenigstens einen Einsatz aus einem von dem Elektrodenmaterial verschiedenen Material auf. Dieser Einsatz bildet zumindest zum Teil die lichtbogenseitige Fläche der Elektrode. Der Einsatz ist derart in die Elektrode eingebracht, dass der Einsatz zumindest teilweise an der lichtbogenseitigen Fläche der Elektrode angeordnet ist. Die lichtbogenseitige Fläche der Elektrode wird somit teilweise aus dem Elektrodenmaterial und teilweise aus dem Material des Einsatzes gebildet, kann aber auch komplett aus einem hochschmelzenden Material bestehen. Der Einsatz kann dabei aus der Elektrode herausragen oder eine geschlossene Fläche mit der restlichen Elektrode bilden.

Der Einsatz kann dabei in einer geeigneten geometrischen Form ausgebildet sein, beispielsweise würfel-, quader- oder zylinderförmig. Dieser Einsatz kann sich insbesondere über die komplette axiale Ausdehnung der Elektrode erstrecken. Weiter insbesondere kann der Einsatz nur eine begrenzte Ausdehnung in axialer Richtung der Elektrode besitzen und somit beispielsweise nur unmittelbar an der lichtbogenseitigen Fläche der Elektrode angeordnet sein. Insbesondere werden der Durchmesser, die Austrittsarbeit und der Schmelzpunkt des Einsatzes an die zu erzielende Stromstärke des Schweißstroms angepasst. Diese Parameter werden insbesondere derart angepasst, dass der Einsatz im Betrieb über den gesamten entsprechenden Teil der lichtbogenseitigen Fläche der Elektrode gleichmäßig erwärmt wird.

Gemäß einem zweiten erfindungsgemäßen Aspekt weist die Elektrode auf ihrer lichtbogenseitigen Fläche mehrere Fokussiergasbohrungen zur Zufuhr eines Fokussiergases zum Fokussieren eines Lichtbogens auf. Das Fokussiergas wird zusätzlich zum Schutzgas und/oder zum Plasmagas zugeführt. Das Fokussiergas wird insbesondere in Form einer Fokussiergasströmung zugeführt. Unter Fokussieren des Lichtbogens ist dabei zu verstehen, dass der Ansatz des Lichtbogens auf der lichtbogenseitigen Fläche der Elektrode fokussiert bzw. bewegt wird, also auf einen bestimmten Bereich der Elektrode eingeschnürt bzw. über eine bestimmte Fläche bewegt wird.

Die Fokussiergasbohrungen können dabei jeweils unterschiedliche Durchmesser, Geometrien und Abstände zueinander aufweisen. Alternativ können die Fokussiergasbohrungen auch identisch ausgebildet und/oder auch äquidistant zueinander angeordnet sein. Insbesondere weist die Elektrode mindestens vier Fokussiergasbohrungen auf. Der Schweißbrenner umfasst insbesondere eine geeignete Fokussiergaszufuhr. Die Elektrode kann insbesondere mit dieser Fokussiergaszufuhr verbunden werden. Die Fokussiergaszufuhr ist dazu eingerichtet, das Fokussiergas durch die Fokussiergasbohrungen zuzuführen. Das Fokussiergas wird insbesondere einem bestimmten Bereich vor der lichtbogenseitigen Fläche der Elektrode zugeführt. Weiter insbesondere wird das Fokussiergas dem Lichtbogen zugeführt. Menge und Zusammensetzung des Fokussiergases können insbesondere verändert werden. Bevorzugt wird Argon, Helium oder ein Gemisch aus Argon und Helium als Fokussiergas verwendet.

Gemäß einem dritten erfindungsgemäßen Aspekt weist die Elektrode wenigstens eine axial verlaufende Gasabführbohrung zur Abführung eines Gases von der lichtbogenseitigen Fläche der Elektrode durch die axial verlaufende Gasabführbohrung der Elektrode auf. Die Elektrode ist dabei insbesondere als eine Hohlelektrode ausgebildet. Der Schweißbrenner umfasst insbesondere eine Gasabführung. Diese Gasabführung ist insbesondere dazu eingerichtet, das Gas von der lichtbogenseitigen Fläche der Elektrode durch die axial verlaufende Gasabführbohrung der Elektrode abzuführen. Das Gas wird dabei aus einem bestimmten Bereich vor der lichtbogenseitigen Fläche der Elektrode abgeführt.

Durch den Lichtbogen wird das Gas vor der lichtbogenseitigen Fläche der Elektrode erwärmt. Dieses erwärmte Gas wird durch die Gasabführung abgeführt. Insbesondere ist das abgeführte Gas ein Schutzgas. Schutzgas, welches durch den Lichtbogen erwärmt wird, kann somit mittels der Gasabführbohrung abgeführt werden. Insbesondere kann auch Gas zentral zugeführt werden, um eine Strömung zum Werkstück zu erzeugen.

### Vorteile der Erfindung

Durch die genannten drei Aspekte der Erfindung wird jeweils der Ansatz des Lichtbogens auf der lichtbogenseitigen Fläche der Elektrode kontrolliert beeinflusst. Insbesondere wird ein punktueller Ansatz auf der Elektrode vermieden. Weiterhin wird die Energiedichte an der Elektrode durch die drei Aspekte reduziert. Somit werden Belastungen, die auf die Elektrode wirken, insbesondere eine thermische Belastung, reduziert. Durch die Erfindung werden somit eine Belastbarkeit der Elektrode, insbesondere eine thermische Belastbarkeit und eine Strombelastbarkeit, erhöht.

Durch den Einsatz kann der Ansatz des Lichtbogens gezielt beeinflusst werden. Insbesondere setzt der Lichtbogen dabei direkt an dem Einsatz an. Das Material des Einsatzes bzw. die physikalischen Eigenschaften des Materials (insbesondere Schmelzpunkt, Siedepunkt, elektrische und thermische Leitfähigkeit sowie Austrittsarbeit) werden im Vergleich zu dem Elektrodenmaterial derart gewählt, dass der Lichtbogen favorisiert an dem Einsatz ansetzt. Dies wird insbesondere dadurch erreicht, dass diese physikalischen Eigenschaften des Einsatzes an die Stromstärke angepasst werden. Die physikalischen Eigenschaften werden insbesondere derart gewählt, dass der Einsatz marginal über die gesamte Fläche angeschmolzen wird. Somit wird die Gefahr vermieden, dass der Lichtbogen punktuell an der Elektrode selbst ansetzt und die Elektrode dadurch aufgeschmolzen wird. Da der Lichtbogen favorisiert an dem Einsatz ansetzt, erhitzt sich die Elektrode nicht so stark, wie eine Elektrode ohne einen erfindungsgemäßen Einsatz. Somit kann eine Zerstörung der Elektrode und eine Verunreinigung bzw. Fehler der Schweißnaht durch eine sonst stark aufgeschmolzene Elektrode verhindert werden.

Insbesondere wird der Durchmesser des Einsatzes an die zu erzielende Stromstärke des Schweißstroms angepasst. Insbesondere wird für höhere Stromstärken ein größerer Durchmesser verwendet. Bei Materialien des Einsatzes mit einer geringeren Austrittsarbeit werden insbesondere vergleichsweise geringe Durchmesser verwendet. Somit wird insbesondere erzielt, dass der Lichtbogen nicht punktförmig, sondern gleichmäßig ansetzt und die Elektrode nicht durch zu große Energiedichten zerstört wird.

Weiterhin wird der Ansatz des Lichtbogens an der lichtbogenseitigen Fläche der Elektrode durch Zuführen des Fokussiergases gezielt beeinflusst. Das zugeführte Fokussiergas bzw. die Fokussiergasströmung übt dabei eine kühlende Wirkung auf die Elektrode aus, insbesondere auf die lichtbogenseitige Fläche der Elektrode. Durch das Fokussiergas wird die Elektrode direkt gekühlt. Weiterhin wird durch das Fokussiergas bzw. durch den Impuls der Fokussiergasströmung ein Druck auf den Lichtbogen, insbesondere auf den Lichtbogenansatz ausgeübt. Der Lichtbogen kann somit in den Randbereichen gekühlt werden. Durch diese kühlende Wirkung, den ausgeübten Druck sowie durch physikalische und chemische Eigenschaften des Fokussiergases wird der Ansatz des Lichtbogens beeinflusst.

Je nachdem, wie die Fokussiergasströmung relativ zu der Elektrode bzw. relativ zu dem Lichtbogen gerichtet ist, kann der Ansatz des Lichtbogens auf der lichtbogenseitigen Fläche der Elektrode fokussiert werden und auf einen bestimmten Bereich eingeschnürt werden. Somit wird auch durch das Fokussiergas verhindert, dass der Lichtbogen punktuell an der Elektrode ansetzt oder auf den Bereich der Elektrode mit geringem Schmelzpunkt überspringt.

Eine auf den Lichtbogen wirkende Lorentzkraft hängt insbesondere von dem Durchmesser des Lichtbogenansatzes an der Anode und der Kathode (also an der Elektrode und dem Werkstück) ab. Die Lorentzkraft bedingt eine Stabilität einer Lichtbogenströmung. Diese Lichtbogenströmung bezeichnet insbesondere eine Energieströmung zwischen Elektrode und Werkstück und ist für die Stabilität des Prozesses entscheidend. Je stabiler und stärker diese Lichtbogenströmung zum Werkstück ist, desto größer ist der Energieeintrag in das Werkstück und desto gleichmäßiger ist die Ausbildung der Schweißnaht. Da durch die Erfindung ein punktueller Ansatz des Lichtbogens verhindert wird, wird auch die Lichtbogenströmung stabilisiert und insbesondere erhöht, wodurch der Energieeintrag in das zu schweißende Werkstück erhöht und die Prozessstabilität verbessert werden.

Durch die Gasabführbohrung wird durch den Lichtbogen und andere thermische Effekte erhitztes Gas, welches sich vor der Elektrode sammelt, abgeführt. Somit kann die Temperatur des Gases vor der Elektrode indirekt reduziert werden. Durch eine derartige verringerte Gastemperatur vor der Elektrode wird die Elektrode nicht so stark erhitzt bzw. kann sich leichter abkühlen. Durch die Gasabführbohrung und das Abführen des Gases wird die Elektrode indirekt gekühlt und ihre thermische Belastbarkeit wird erhöht.

Weiterhin kann somit verhindert werden, dass in dem Gas vor der Elektrode lokale thermische Schwankungen entstehen. Somit kann weiterhin verhindert werden, dass sich die Elektrode in manchen Bereichen lokal stärker erhitzt als in anderen Bereichen. Der Lichtbogen setzt favorisiert an derartigen lokal überhitzten Bereichen auf der Elektrode punktuell an. Durch das Abführen des Gases mittels der Gasabführbohrung wird somit ebenfalls ein punktueller Ansatz des Lichtbogens verhindert.

Die Erfindung eignet sich insbesondere für eine Verwendung der Elektrode als Anode in einem Schweißbrenner. Wie eingangs erwähnt, sind die Belastbarkeit, insbesondere die thermische Belastbarkeit und die Strombelastbarkeit, bei einer derartigen Verwendung der Elektrode als Anode herkömmlicherweise begrenzt. Da die Elektrode durch die Erfindung gekühlt wird und ein punktueller Ansatz des Lichtbogens vermieden wird, kann die Belastbarkeit einer als Anode verwendeten Elektrode erhöht werden. Die erfindungsgemäße Elektrode kann somit mit größeren Strömen bestromt werden, als herkömmliche Elektroden. Somit kann weiterhin eine Reinigungswirkung des Werkstücks vergrößert werden, wenn die Elektrode als Anode und das zu schweißende Werkstück als Kathode verwendet werden. Dadurch wird eine Oxidschicht, welche sich gegebenenfalls auf dem Werkstück bildet, mit hoher Effizient aufgelöst.

Durch die Erfindung wird es also ermöglicht, eine Strombelastbarkeit der als Anode bestromten Elektrode beim Wolfram-Schutzgasschweißen zu erhöhen. Die erfindungsgemäße Elektrode kann mit Schweißströmen mit Stromstärken bis zu 500 A betrieben werden. Vorzugsweise wird die Elektrode in dem erfindungsgemäßen Schweißbrenner mit einem Schweißstrom mit einer Stromstärke zwischen 80 A und 500 A bestromt. Der Schweißbrenner kann somit insbesondere zum Hochstrom-Pluspol-Wolfram-Schutzgasschweißen verwendet werden, bei welchem die Anode auch bei hohen Schweißstromstärken betrieben werden kann.

Durch die Erfindung wird es insbesondere ermöglicht, Leichtmetalle wie Aluminium, Aluminiumlegierungen, Magnesium, Magnesiumlegierungen, Titan oder weitere Werkstoffen wie z.B. Bronze prozesssicher und effizient zu schweißen. Dies wird insbesondere durch den hohen Energieeintrag eines Hochstrom-Lichtbogens in das als Kathode geschaltete Werkstück ermöglicht.

Vorteilhafterweise ist der Einsatz im Wesentlichen im Zentrum der lichtbogenseitigen Fläche der Elektrode angeordnet. Insbesondere bildet der Einsatz dabei das Zentrum bzw. eine Spitze der Elektrode.

Vorzugsweise sind die Fokussiergasbohrungen um das Zentrum der lichtbogenseitigen Fläche der Elektrode herum angeordnet. Insbesondere sind die Bohrungen konzentrisch um das Zentrum angeordnet. Durch das zugeführte Fokussiergas wird der Ansatz des Lichtbogens somit insbesondere auf das Zentrum der lichtbogenseitigen Fläche der Elektrode fokussiert.

Bevorzugt ist der Einsatz im Wesentlichen im Zentrum der lichtbogenseitigen Fläche der Elektrode angeordnet und die Fokussiergasbohrungen sind bevorzugt um den Einsatz herum angeordnet. Somit wird einerseits durch den Einsatz erreicht, dass der Lichtbogen in dem Zentrum der lichtbogenseitigen Fläche der Elektrode ansetzt. Andererseits wird der Ansatz des Lichtbogens zusätzlich durch das Fokussiergas auf das Zentrum fokussiert.

Vorzugsweise verjüngt sich die Elektrode zu ihrer lichtbogenseitigen Fläche hin. Die Elektrode weist somit insbesondere eine "Spitze" auf. Somit weist die Elektrode keine rechtwinkligen oder nahezu rechtwinkligen Kanten zwischen ihrer lichtbogenseitigen Fläche und einer Seiten- bzw. Mantelfläche auf. Die lichtbogenseitige Fläche ist somit schräg in Relation zu der Mantelfläche, also um einen bestimmten Winkel zur Mantelfläche geneigt. Der Ansatz des Lichtbogens kann somit nicht sprunghaft von der lichtbogenseitigen Fläche auf die Mantelfläche der Elektrode überspringen. Stattdessen kann der Ansatz des Lichtbogens entlang der (schrägen) lichtbogenseitigen Fläche verschoben werden. Besonders bevorzugt ist der Einsatz dabei im Zentrum der lichtbogenseitigen Fläche der Elektrode angeordnet und bildet zumindest teilweise die Spitze bzw. den verjüngten Teil der Elektrode. Insbesondere wird der Ansatz des Lichtbogens durch den Einsatz und das Fokussiergas auf diese Spitze bzw. auf den verjüngten Teil fokussiert. Die vom Lichtbogen bedeckte Fläche ist abhängig von der Stromstärke und wird mit zunehemnder Stromstärke größer, d.h. der Lichtbogenansatz vergrößert sich, sodass die Stromdichte und damit die Energiedichte nahezu konstant bleibt.

Gemäß einer vorteilhaften Ausgestaltung der Erfindung sind die Fokussiergasbohrungen derart ausgebildet, dass sich das zugeführte Fokussiergas bzw. die Fokussiergasströmung in Form einer Wirbelströmung ausbreitet. Unter Wirbelströmung (auch als "swirl" bezeichnet) ist zu verstehen, dass sich die Fokussiergasströmung schrauben- bzw. helixförmig um eine Achse ausbreitet. Diese Achse verläuft insbesondere in Richtung der axialen Ausdehnung der Elektrode, weiter insbesondere in Richtung der Ausbreitung des Lichtbogens. Insbesondere entspricht diese Achse einer Lichtbogenachse des Lichtbogens. Insbesondere ist die Wirbelströmung somit helixförmig um den Lichtbogen herum gerichtet. Die Richtung der Wirbelströmung ist somit eine Überlagerung aus einer ersten Richtung tangential zu dieser Achse und aus einer zweiten, axialen Richtung parallel zu dieser Achse.

Eigenschaften der Wirbelströmung, beispielsweise ein Krümmungsradius, eine Ganghöhe und/oder eine Steigung, können durch die Ausgestaltung der Fokussiergasbohrungen sowie der Fokussiergaszufuhr eingestellt werden. Beispielsweise werden die Eigenschaften der Wirbelströmung durch die Anzahl von Fokussiergasbohrungen, durch eine Geometrie der einzelnen Fokussiergasbohrungen, durch eine Anordnung der Fokussiergasbohrungen in Bezug auf die Achse, insbesondere eine Außermittigkeit der Fokussiergasbohrungen in Bezug auf die Achse, und/oder durch eine Anordnung der Fokussiergasbohrungen in Bezug auf das Werkstück eingestellt.

Bevorzugt ist der Einsatz aus einem hochschmelzenden Material gebildet, insbesondere aus einem höherschmelzenden Material als das Elektrodenmaterial, weiter insbesondere aus einem höherschmelzenden Refraktärmetall als das Elektrodenmaterial. Da der Lichtbogen insbesondere an dem Einsatz ansetzt, kann durch Verwendung eines hochschmelzenden Materials verhindert werden, dass der Einsatz aufschmilzt. Weiterhin wird somit verhindert, dass die restliche Elektrode aus vergleichsweise niedrigschmelzendem Material aufgeschmolzen wird.

Bevorzugt ist der Einsatz aus Zirkonium, Kohlenstoff, Rhenium, Tantal, Yttrium, Niob, Hafnium, reinem Wolfram oder Wolfram mit Zusätzen aus Metallen der Seltenen Erden (wie Lanthan, Cer, Yttrium), Zirconium und/oder Thorium ausgebildet. Diese Zusätze im Wolfram liegen insbesondere als Oxide vor. Der Einsatz kann durch pressen, sintern oder hintergießen fixiert werden.

Bei Verwendung von Hafnium als Material für den Einsatz können besonders vorteilhaft auch aktive Gase wie Kohlendioxid oder Sauerstoff als Schutzgas verwendet werden, ohne dass die Elektrode zerstört wird. Elektroden aus Wolfram in herkömmlichen Schweißbrennern würden aufgrund der großen Sauerstoffaffinität von aktiven Gasen zerstört werden.

Vorzugsweise ist die Elektrode aus einem Elektrodenmaterial mit hoher Wärmeleitfähigkeit gebildet, bevorzugt aus Kupfer und/oder Messing. Besonders bevorzugt wird eine Mischlegierung aus Kupfer und Wolfram verwendet. Somit kann die Elektrode sehr effektiv gekühlt werden und besitzt zudem einen hohen Schmelzpunkt. Da der Lichtbogen insbesondere an dem Einsatz ansetzt, muss die Elektrode nicht notwendigerweise aus einem hochschmelzenden Material ausgebildet sein und es kann dennoch verhindert werden, dass die Elektrode aufschmilzt. Die Mischlegierung kann einen gradierten Verlauf von der lichtbogenseitigen Fläche zur brennerseitigen Seite aufweisen.

Vorteilhafterweise ist der Einsatz in einem Hohlraum im Inneren der Elektrode angeordnet, insbesondere in einem zylindrischen Hohlraum. Die Mantelfläche zwischen dem Einsatz und der restlichen Elektrode wird insbesondere möglichst groß gewählt, um eine effektive Wärmeableitung zu gewährleisten. Der Einsatz wird insbesondere in einem Herstellungsprozess von dem Grundkörper der restlichen Elektrode umgossen, gesintert oder in diesen eingepresst.

Vorzugsweise umfasst die Elektrode mehrere Einsätze. Ein erster Einsatz ist dabei bevorzugt im Wesentlichen im Zentrum der lichtbogenseitigen Fläche der Elektrode angeordnet. Wenigstens ein weiterer Einsatz ist bevorzugt um diesen ersten Einsatz herum angeordnet. Insbesondere setzt der Lichtbogen dabei an sämtlichen Einsätzen an. Somit kann eine Belastung der einzelnen Einsätze reduziert werden.

Die Erfindung betrifft weiterhin einen Schweißbrenner zum Wolfram-Schutzgasschweißen, insbesondere zum Wolfram-Inertgasschweißen oder zum Plasmaschweißen. Ausgestaltungen dieses erfindungsgemäßen Schweißbrenners ergeben sich aus der obigen Beschreibung der erfindungsgemäßen Elektrode in analoger Art und Weise.

Vorzugsweise umfasst der Schweißbrenner eine Schutzgaszufuhr, die dazu eingerichtet ist, das durch die Gasabführbohrung abgeführte Gas als Schutzgas oder als Fokussiergas zuzuführen. Das Schutzgas wird insbesondere durch eine geeignete Schutzgasdüse zugeführt. Wie weiter oben erwähnt, wird insbesondere Schutzgas durch die Gasabführbohrung abgeführt. Dieses Gas kann im Zuge einer Rückführung erneut als Schutzgas zugeführt werden. Somit können die mittlere Temperatur des Schutzgases und der Energieeintrag in das Werkstück erhöht werden.

Durch die Schutzgaszufuhr kann auch ein Schutzgas oder Fokussiergas unabhängig von dem abgeführten Gas zugeführt werden. Bevorzugt wird Argon, Helium oder eine Mischung aus Argon, Helium und/oder Sauerstoff als Schutzgas oder Fokussiergas zugeführt. Demgemäß wird insbesondere reines Argon, reines Helium oder eine Mischung aus Argon und Sauerstoff, aus Argon und Helium oder aus Argon, Helium und Sauerstoff als Schutzgas oder Fokussiergas zugeführt.

Bei diesen Mischungen werden insbesondere Sauerstoffanteile zwischen 50 ppm und 1% sowie Helium zwischen 2% und 50% verwendet. Bei einem Werkstück aus hochlegiertem Stahl wird insbesondere ein Schutzgas aus Argon oder Helium und ein Anteil von bis zu 10% Wasserstoff zugeführt. Beim Plasmaschweißen werden analoge Gemische als Schutzgas eingesetzt. Zusätzlich werden insbesondere das Plasmagas und das Fokussiergas aus den genannten Gasgemischen verwendet. Beispielsweise kann ein Fokussiergas einen Gehalt an Sauerstoff von 50 ppm bis 3 % aufweisen.

Durch das gezielte Beeinflussen der Energiedichte und/oder des Lichtbogenansatzes ist es insbesondere möglich, den Anteil an Helium im Schutzgas zu reduzieren oder ein Argon-Sauerstoff-Gemisch als Schutzgas zu verwenden. Somit kann das Wolfram-Schutzgasschweißen auch an Orten geringer Heliumressourcen effektiv eingesetzt werden. Weiterhin können der Fertigungsaufwand sowie Kosten für den Anwender reduziert werden.

Vorteilhafterweise umfasst der Schweißbrenner eine Wasserkühlungsvorrichtung, die dazu eingerichtet ist, die Elektrode insgesamt oder den Einsatz direkt und/oder indirekt zu kühlen. Eine derartige indirekte Kühlung ist insbesondere über große Kontaktflächen zwischen der Elektrode und dem restlichen Schweißbrenner bzw. der Elektrodenhalterung realisiert. Eine direkte Kühlung ist insbesondere durch das Anströmen einer Wand bzw. der Mantelfläche der Elektrode mit Kühlwasser realisiert.
Gemäß einer weiteren bevorzugten Ausgestaltung der Erfindung befindet sich die Elektrode in einer Halterung, welche die Stromleitung sowie den Wärmeaustausch übernimmt. Diese kann besonders vorteilhaft anstelle der herkömmlichen Spannzange verwendet werden.
Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen verwendbar sind, ohne den Rahmen der vorliegenden Erfindung, wie er durch die folgenden Ansprüche definiert wird, zu verlassen.

Die Erfindung ist anhand eines Ausführungsbeispiels in der Zeichnung schematisch dargestellt und wird im Folgenden unter Bezugnahme auf die Zeichnung ausführlich beschrieben.

Kurze Beschreibung der Zeichnungen
- Figur 1: zeigt schematisch eine bevorzugte Ausgestaltung eines erfindungsgemäßen Schweißbrenners zum Wolfram-Schutzgasschweißen in einer Schnittansicht.
- Figur 2: zeigt schematisch eine bevorzugte Ausgestaltung einer erfindungsgemäßen Elektrode für einen Schweißbrenner zum Wolfram-Schutzgasschweißen in einer perspektivischen Ansicht.
- Figur 3: zeigt schematisch eine weitere bevorzugte Ausgestaltung einer erfindungsgemäßen Elektrode für einen Schweißbrenner zum Wolfram-Schutzgasschweißen sowohl in einer perspektivischen Ansicht (Figur 3A) als auch in einer Schnittansicht (Figur 3B).

### Ausführungsform(en) der Erfindung

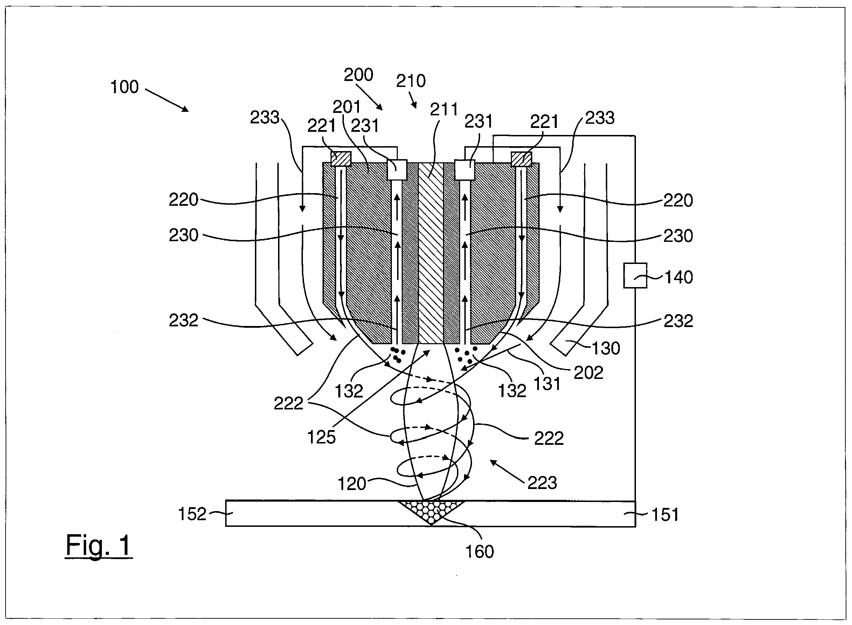

In Figur 1 ist eine bevorzugte Ausgestaltung eines erfindungsgemäßen Schweißbrenners zum Wolfram-Schutzgasschweißen schematisch dargestellt und mit 100 bezeichnet. In diesem Beispiel ist der Schweißbrenner 100 als ein Schweißbrenner zum Wolfram-Inertgasschweißen ausgebildet. Mittels des Schweißbrenners 100 wird durch einen Fügevorgang ein erstes Werkstück 151 mit einem zweiten Werkstück 152 verschweißt.

Der Schweißbrenner 100 weist eine bevorzugte Ausgestaltung einer erfindungsgemäßen Elektrode 200 auf. Die Werkstücke 151 und 152 und die Elektrode 200 sind mit einer Schweißstromquelle 140 elektrisch verbunden. Die Elektrode 200 wird somit mit einem Schweißstrom bestromt. Die Elektrode 200 wird dabei als Anode verwendet, die Werkstücke 151 und 152 als Kathode. Ein Lichtbogen 120 brennt zwischen der Elektrode 200 und den Werkstücken 151 und 152. Durch den Lichtbogen 120 werden das erste und das zweite Werkstück 151 und 152 zumindest teilweise aufgeschmolzen, wodurch ein Schmelzbad 160 entsteht.

Durch den Schweißbrenner 100 wird ein Hochstrom-Schweißen durchgeführt und die Elektrode 200 wird als Hochstrom-Anode verwendet. Die Elektrode 200 wird dabei mit einem Schweißstrom zwischen 80 A und 500 A bestromt.

Der Schweißbrenner 100 weist weiterhin eine Schutzgasdüse 130 auf, um dem Schweißprozess in Richtung des Lichtbogens 120 bzw. in Richtung des Schweißbads 160 ein Schutzgas in Form einer Schutzgasströmung zuzuführen, angedeutet durch Bezugszeichen 131.

Die Elektrode 200 weist in ihrem Inneren einen Einsatz 210 auf. Die Elektrode ist dabei aus einem Elektrodenmaterial 201 ausgebildet und der Einsatz 210 besteht aus einem von dem Elektrodenmaterial 201 verschiedenen Material 211. Das Einsatzmaterial 211 hat einen höheren Schmelzpunkt als das Elektrodenmaterial 201. In diesem Beispiel ist die Elektrode 200 aus Kupfer 201 ausgebildet und der Einsatz 210 aus Wolfram 211.

In diesem Beispiel erstreckt sich der Einsatz 210 über die komplette axiale Ausdehnung der Elektrode 200. Der Einsatz bildet einen Teil einer lichtbogenseitigen Fläche 202 der Elektrode 200. An dieser lichtbogenseitigen Fläche 202 setzt der Lichtbogen 120 an der Elektrode 200 an. Der Einsatz ist im Zentrum der lichtbogenseitigen Fläche 202 angeordnet. Weiterhin verjüngt sich die Elektrode 200 zu ihrer lichtbogenseitigen Fläche 202 hin.

Werden die Elektrode 200 und die Werkstücke 151 und 152 mit der Schweißstromquelle 140 elektrisch verbunden, setzt der Lichtbogen favorisiert an dem aus Wolfram 211 bestehenden Einsatz 210 an, und weniger favorisiert an der übrigen aus Kupfer 201 ausgebildeten Elektrode 200. Somit kann ein Ansatz 125 des Lichtbogens 120 an der Elektrode 200 beeinflusst werden. Insbesondere setzt der Lichtbogen 120 direkt an dem Einsatz 210 und somit im Zentrum der lichtbogenseitigen Fläche 202 an.

Die Elektrode 200 weist weiterhin Fokussiergasbohrungen 220 auf. In dem Beispiel von Figur 1 sind der Übersichtlichkeit halber nur zwei Fokussiergasbohrungen 220 dargestellt. Bevorzugt weist die Elektrode 200 jedoch mindestens vier, bevorzugt sechs, acht, zehn, zwölf oder vierzehn, Fokussiergasbohrungen 220 auf. Die Fokussierbohrungen 220 sind um den Einsatz 210 herum angeordnet. Die Fokussiergasbohrungen 220 sind mit einer Fokussiergaszufuhr 221 verbunden. Mittels der Fokussiergaszufuhr 221 wird durch die Fokussiergasbohrungen 220 in Richtung des Lichtbogens 120 ein Fokussiergas in Form einer Fokussiergasströmung 222 zugeführt. Fokussiergasbohrungen 220 können beispielsweise auch in anderen Bauteilen des Brenners, wie z.B. der Schutzgasdüse untergebracht sein. Die Wirkung findet jedoch am anodischen Lichtbogenansatz statt.

Als Fokussiergas wird dabei insbesondere Argon zugeführt. Durch das Fokussiergas bzw. durch die Fokussiergasströmung 222 wird der Lichtbogen 120, insbesondere der Lichtbogenansatz 125 fokussiert. Durch das Fokussiergas bzw. durch die Fokussiergasströmung 222 wird der Lichtbogenansatz 125 auf das Zentrum der lichtbogenseitigen Fläche 202 der Elektrode 200 fokussiert (zusätzlich zu dem Einsatz 210). Weiterhin wird die Elektrode 200, insbesondere die lichtbogenseitige Fläche 202 der Elektrode 200, durch das Zuführen des Fokussiergases bzw. durch die Fokussiergasströmung 222 gekühlt.

Zur Fokussierung kann auch das Schutzgas verwendet werden, indem dieses zumindest teilweise beispielsweise über Blenden auf die Elektrode 220 gerichtet wird. Besonders vorteilhaft kann der Schweißbrenner 100 zu diesem Zweck derart ausgestaltet werden, dass die Elektrode 200 aus der Schutzgasdüse 130 hervorsteht. Somit kann das Zünden des Lichtbogens 120 vereinfacht werden und die Zugänglichkeit sowie die Beobachtbarkeit des Prozesses können verbessert werden.

Die Fokussierbohrungen 220 sind derart in der Elektrode 200 angeordnet, dass sich die Fokussiergasströmung 222 als eine Wirbelströmung (auch als "swirl" bezeichnet) ausbildet. Die Fokussiergasströmung 222 ist somit als eine Schraubenform bzw. als eine Helixform 223 um den Lichtbogen 120 herum gerichtet.

Weiterhin weist die Elektrode 210 zwei axial verlaufende Gasabführbohrungen 230 auf. Die Elektrode 210 ist somit als Hohlanode ausgebildet. Die Gasabführbohrungen 230 verlaufen in diesem Beispiel parallel zu dem Einsatz 210. Eine Gasabführbohrung kann auch in dem Einsatz 210 ausgebildet sein.

Durch den Lichtbogen 120 bzw. durch thermische Effekte des Lichtbogens 120 erwärmt sich das zugeführte Schutzgas. Vor der lichtbogenseitigen Fläche 202 sammelt sich somit erwärmtes Schutzgas 132 (angedeutet durch Punkte). Die Gasabführbohrungen 230 sind mit einer Gasabführung 231 verbunden. Durch die Gasabführung 231 wird das erwärmte Schutzgas 132 von der lichtbogenseitigen Fläche 202 abgeführt, angedeutet durch das Bezugszeichen 232.

Durch das Abführen des erwärmten Schutzgases 132 wird die Elektrode 200, insbesondere die lichtbogenseitige Fläche 202 der Elektrode 200 gekühlt.

Weiterhin kann das abgeführte Schutzgas 232 durch die Gasabführung 231 dem Schweißprozess erneut als Schutzgas oder als Fokussiergas 222 zugeführt werden. Das rückgeführte Schutzgas ist in Figur 1 mit dem Bezugszeichen 233 angedeutet.

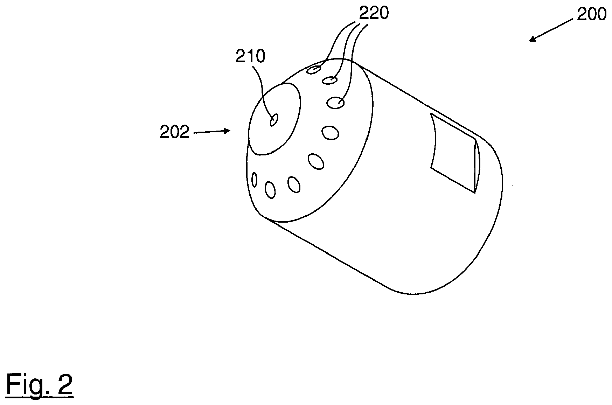

In Figur 2 ist eine weitere bevorzugte Ausgestaltung der erfindungsgemäßen Elektrode 200 schematisch in einer perspektivischen Ansicht dargestellt. Identische Bezugszeichen in den Figuren 1 und 2 bezeichnen baugleiche Elemente.

Die Elektrode in Figur 2 weist einen Einsatz 210 und eine Vielzahl von Fokussiergasbohrungen 220 auf. Der Einsatz ist im Zentrum der lichtbogenseitigen Fläche 202 der Elektrode 200 angeordnet. Die Fokussiergasbohrungen 220 sind kreisförmig um den Einsatz 210 herum angeordnet.

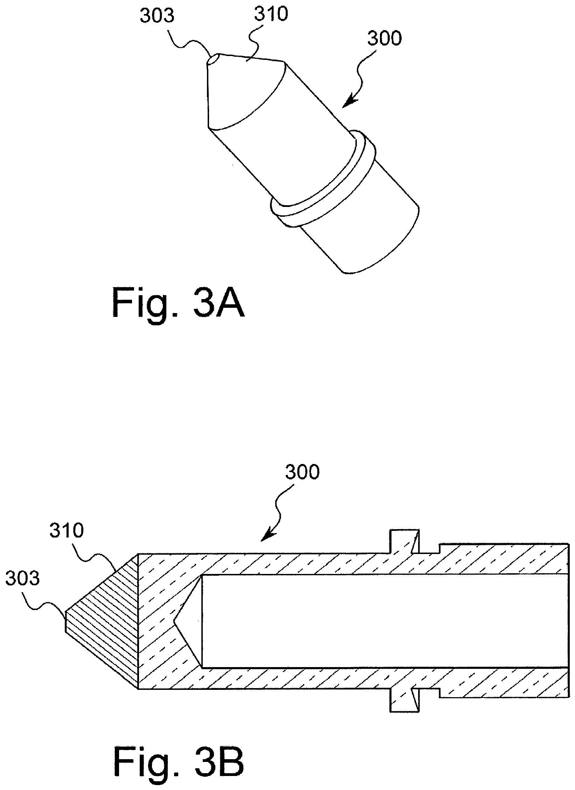

In Figur 3 ist eine weitere bevorzugte Ausgestaltung der erfindungsgemäßen Elektrode 300 schematisch in einer perspektivischen Ansicht (Figur 3A) sowie schematisch in einer Schnittansicht (Figur 3B) dargestellt.

Die Elektrode in Figur 3 weist einen Einsatz 310 auf. Der Einsatz 310 stellt in diesem Fall die lichtbogenseitige Fläche der Elektrode selbst dar. Fokussiergasbohrungen sind hier nicht dargestellt. Diese kegelförmige Ausgestaltung der Elektrode 300 weist eine "Spitze" 303 auf. Mit dieser Ausgestaltung kann insbesondere vermieden werden, dass der Ansatz des Lichtbogens sprunghaft auf die Mantelfläche der Elektrode 300 überspringt. Der Einsatz 310 ist hier als lichtbogenseitige Fläche der Elektrode ausgebildet und bildet besagte Spitze 303. Der Lichtbogenansatz wird somit auf diese Spitze 303 der Elektrode 300 fokussiert. Der Lichtbogenansatz an der Spitze 303 der Elektrode 300 vergrößert sich mit zunehmender Stromstärke

### Bezugszeichenliste

- 100: Schweißbrenner
- 120: Lichtbogen
- 125: Ansatz des Lichtbogens
- 130: Schutzgasdüse
- 131: Schutzgasströmung
- 132: erwärmtes Schutzgas
- 140: Schweißstromquelle
- 151: erstes Werkstück
- 152: zweites Werkstück
- 160: Schmelzbad

- 200: Elektrode
- 201: Elektrodenmaterial, Kupfer
- 202: lichtbogenseitige Fläche
- 210: Einsatz
- 211: Einsatzmaterial, Wolfram
- 220: Fokussiergasbohrung
- 221: Fokussiergaszufuhr
- 222: Fokussiergasströmung
- 223: Schraubenform, Helixform
- 230: Gasabführbohrungen
- 231: Gasabführung
- 232: abgeführtes Schutzgas
- 233: rückgeführtes Schutzgas
- 300: Elektrode
- 303: Spitze
- 310: Einsatz

## Patentansprüche

1. Elektrode (200) mit einer Schutzgasdüse (130) für einen Schweißbrenner (100) zum Wolfram-Inertgasschweißen, wobei die Elektrode (200) wenigstens einen Einsatz (210) aus einem von dem Elektrodenmaterial (201) verschiedenen Material (211) aufweist, wobei der Einsatz (210) zumindest zum Teil eine lichtbogenseitige Fläche (202) der Elektrode bildet und die Elektrode (200) auf ihrer lichtbogenseitigen Fläche mehrere Fokussiergasbohrungen (220) zur Zufuhr eines Fokussiergases (222) zum Fokussieren eines Lichtbogens (120) aufweist, wobei eine Schutzgasdüse (130) vorgesehen ist, wodurch Schutzgas (131) beim Schweißen zugeführt wird, wobei die Elektrode (200) aus der Schutzgasdüse (130) hervorsteht, und wobei die Elektrode als Anode bestromt wird.

2. Elektrode (200) mit einer Schutzgasdüse (130) nach Anspruch 1, wobei der Einsatz (210) im Wesentlichen im Zentrum der lichtbogenseitigen Fläche (202) der Elektrode (200) angeordnet ist.

3. Elektrode (200) mit einer Schutzgasdüse (130) nach einem der vorstehenden Ansprüche, wobei sich die Elektrode (200) zu ihrer lichtbogenseitigen Fläche (202) hin verjüngt.

4. Elektrode (200) mit einer Schutzgasdüse (130) nach einem der vorstehenden Ansprüche, wobei der Einsatz (210) aus einem hochschmelzenden Material (211) gebildet ist.

5. Elektrode (200) mit einer Schutzgasdüse (130) nach einem der vorstehenden Ansprüche, wobei der Einsatz (210) aus Zirkonium, Kohlenstoff, Rhenium, Tantal, Yttrium, Niob, Hafnium, Wolfram oder aus Wolfram mit einem Zusatz aus Lanthan, Cer, Yttrium, Zirconium und/oder Thorium bzw. deren Oxiden gebildet ist.

6. Elektrode (200) mit einer Schutzgasdüse (130) nach einem der vorstehenden Ansprüche, wobei die Elektrode (200) aus einem Elektrodenmaterial (201) mit hoher Wärmeleitfähigkeit gebildet ist, insbesondere aus Kupfer und/oder Messing oder aus einer Mischlegierung aus Kupfer und Wolfram.

7. Elektrode (200) mit einer Schutzgasdüse (130) nach einem der vorstehenden Ansprüche, wobei der Einsatz (210) in einem Hohlraum, insbesondere in einem zylindrischen Hohlraum, im Inneren der Elektrode (200) angeordnet ist.

8. Elektrode (200) mit einer Schutzgasdüse (130) nach einem der vorstehenden Ansprüche, wobei ein erster Einsatz (200) im Wesentlichen im Zentrum der lichtbogenseitigen Fläche (202) der Elektrode angeordnet ist und wobei wenigstens ein weiterer Einsatz um diesen ersten Einsatz herum angeordnet ist.

9. Verwendung einer Elektrode (200) mit einer Schutzgasdüse (130) nach einem der vorstehenden Ansprüche zum Wolfram-Inertgasschweißen, wobei die Elektrode als Anode bestromt wird.

10. Verwendung einer Elektrode (200) mit einer Schutzgasdüse (130) nach Anspruch 9, wobei die Elektrode (200) mit Ströme zwischen 80 A und 500A bestromt wird.

11. Verwendung einer Elektrode (200) mit einer Schutzgasdüse (130) nach Anspruch 9 oder 10, wobei die Elektrode (200) zum Wolfram-Inertgasschweißen von Aluminium, Aluminiumlegierung, Magnesium, Magnesiumlegierung, oder Bronze verwendet wird.

12. Schweißbrenner (100) zum Wolfram-Inertgasschweißen, mit einer als Anode bestromten Elektrode (200) mit einer Schutzgasdüse (130) nach einem der Ansprüche 1 bis 8.

13. Schweißbrenner (100) nach Anspruch 12 mit einer Wasserkühlungsvorrichtung, die dazu eingerichtet ist, die Elektrode (200) direkt und/oder indirekt zu kühlen.

## Claims

1. Electrode (200) with a protective gas nozzle (130) for a welding torch (100) for tungsten inert gas welding, wherein the electrode (200) comprises at least one insert (210) composed of a material (211) which is different from the electrode material (201), wherein the insert (210) at least partly forms an arc-side surface (202) of the electrode and the electrode (200) comprises, on its arc-side surface, a plurality of focusing gas holes (220) for feeding a focusing gas (222) for focusing an arc (120), wherein a protective gas nozzle (130) is provided, whereby protective gas (131) is fed during welding, wherein the electrode (200) projects from the protective gas nozzle (130) and wherein the electrode is energized as an anode.

2. Electrode (200) with a protective gas nozzle (130) according to Claim 1, wherein the insert (210) is arranged substantially in the centre of the arc-side surface (202) of the electrode (200).

3. Electrode (200) with a protective gas nozzle (130) according to either of the preceding claims, wherein the electrode (200) tapers towards its arc-side surface (202).

4. Electrode (200) with a protective gas nozzle (130) according to any of the preceding claims, wherein the insert (210) is formed from a material (211) having a high melting point.

5. Electrode (200) with a protective gas nozzle (130) according to any of the preceding claims, wherein the insert (210) is formed from zirconium, carbon, rhenium, tantalum, yttrium, niobium, hafnium, tungsten or from tungsten with an additive composed of lanthanum, cerium, yttrium, zirconium and/or thorium or the oxides thereof.

6. Electrode (200) with a protective gas nozzle (130) according to any of the preceding claims, wherein the electrode (200) is formed from an electrode material (201) having high thermal conductivity, in particular from copper and/or brass or from a mixed alloy composed of copper and tungsten.

7. Electrode (200) with a protective gas nozzle (130) according to any of the preceding claims, wherein the insert (210) is arranged in a cavity, in particular in a cylindrical cavity, in the interior of the electrode (200).

8. Electrode (200) with a protective gas nozzle (130) according to any of the preceding claims, wherein a first insert (200) is arranged substantially in the centre of the arc-side surface (202) of the electrode, and wherein at least one further insert is arranged around said first insert.

9. Use of an electrode (200) with a protective gas nozzle (130) according to any of the preceding claims for tungsten inert gas welding, wherein the electrode is energized as an anode.

10. Use of an electrode (200) with a protective gas nozzle (130) according to Claim 9, wherein the electrode (200) is energized with currents of between 80 A and 500 A.

11. Use of an electrode (200) with a protective gas nozzle (130) according to Claim 9 or 10, wherein the electrode (200) is used for the tungsten inert gas welding of aluminium, aluminium alloy, magnesium, magnesium alloy, or bronze.

12. Welding torch (100) for tungsten inert gas welding, comprising an electrode (200) energized as an anode with a protective gas nozzle (130) according to any of Claims 1 to 8.

13. Welding torch (100) according to Claim 12 comprising a water cooling device configured to cool the electrode (200) directly and/or indirectly.

## Revendications

1. Électrode (200) comportant une buse de gaz de protection (130) et destinée à une torche de soudage (100) pour le soudage au tungstène sous gaz inerte, dans laquelle l'électrode (200) comporte au moins un insert (210) constitué d'un matériau (211) différent du matériau de l'électrode (201), dans laquelle l'insert (210) forme au moins en partie une surface côté arc électrique (202) de l'électrode et l'électrode (200) comporte sur sa surface côté arc électrique une pluralité de perçages de gaz de focalisation (220) destinés à délivrer un gaz de focalisation (222) servant à focaliser un arc électrique (120), dans laquelle il est prévu une buse de gaz de protection (130) au moyen de laquelle le gaz de protection (131) est délivré pendant le soudage, dans laquelle l'électrode (200) fait saillie par rapport à la buse de gaz de protection (130) et dans laquelle l'électrode est alimentée en courant en tant qu'anode.

2. Électrode (200) comportant une buse de gaz de protection (130) selon la revendication 1, dans laquelle l'insert (210) est disposé sensiblement au centre de la surface côté arc électrique (202) de l'électrode (200).

3. Électrode (200) comportant une buse de gaz de protection (130) selon l'une des revendications précédentes, dans laquelle l'électrode (200) se rétrécit vers sa surface côté arc électrique (202).

4. Électrode (200) comportant une buse de gaz de protection (130) selon l'une des revendications précédentes, dans laquelle l'insert (210) est constitué d'un matériau réfractaire (211).

5. Électrode (200) comportant une buse de gaz de protection (130) selon l'une des revendications précédentes, dans laquelle l'insert (210) est constitué de zirconium, de carbone, de rhénium, de tantale, d'yttrium, de niobium, de hafnium, de tungstène ou de tungstène avec un additif constitué de lanthane, de cérium, d'yttrium, de zirconium et/ou de thorium, ou leurs oxydes.

6. Électrode (200) comportant une buse de gaz de protection (130) selon l'une des revendications précédentes, dans laquelle l'électrode (200) est constituée d'un matériau d'électrode (201) à conductivité thermique élevée, en particulier de cuivre et/ou de laiton ou d'un alliage mixte de cuivre et de tungstène.

7. Électrode (200) comportant une buse de gaz de protection (130) selon l'une des revendications précédentes, dans laquelle l'insert (210) est disposé dans une cavité, en particulier dans une cavité cylindrique, à l'intérieur de l'électrode (200).

8. Électrode (200) comportant une buse de gaz de protection (130) selon l'une des revendications précédentes, dans laquelle un premier insert (200) est disposé sensiblement au centre de la surface côté arc électrique (202) de l'électrode et dans laquelle au moins un autre insert est disposé autour dudit premier insert.

9. Utilisation d'une électrode (200) comportant une buse de gaz de protection (130) selon l'une des revendications précédentes pour le soudage au tungstène sous gaz inerte, dans laquelle l'électrode est alimentée en courant en tant qu'anode.

10. Utilisation d'une électrode (200) comportant une buse de gaz inerte (130) selon la revendication 9, dans laquelle l'électrode (200) est alimentée en courant avec des courants compris entre 80A et 500A.

11. Utilisation d'une électrode (200) comportant une buse de gaz de protection (130) selon la revendication 9 ou 10, dans laquelle l'électrode (200) est utilisée pour le soudage au tungstène sous gaz inerte d'aluminium, d'un alliage d'aluminium, de magnésium, d'un alliage de magnésium ou de bronze.

12. Torche de soudage (100) pour le soudage au tungstène sous gaz inerte, comportant une électrode (200) alimentée en courant en tant qu'anode et comprenant une buse de gaz de protection (130) selon l'une des revendications 1 à 8.

13. Torche de soudage (100) selon la revendication 12, comportant un dispositif de refroidissement à eau conçu pour refroidir directement et/ou indirectement l'électrode (200).
